Europäisches Patentamt

European Patent Office

Office européen des brevets

(11) Numéro de publication: **0 264 317 B1**

# FASCICULE DE BREVET EUROPEEN

(45) Date de publication de fascicule du brevet:
10.04.91

(51) Int. Cl.⁵: **G06F 9/46**

(21) Numéro de dépôt: **87402118.1**

(22) Date de dépôt: **23.09.87**

(54) **Dispositif pour l'optimalisation des performances de primitives temps réel d'un noyau d'exécutif temps réel sur des structures multiprocesseurs.**

(30) Priorité: **30.09.86 FR 8613614**

(43) Date de publication de la demande:
**20.04.88 Bulletin 88/16**

(45) Mention de la délivrance du brevet:
**10.04.91 Bulletin 91/15**

(84) Etats contractants désignés:
**BE DE GB IT**

(56) Documents cités:
**DE-A- 3 105 527**
**FR-A- 2 208 551**
**GB-A- 2 009 981**

**LE NOUVEL AUTOMATISME, vol. 24, no. 8, septembre-octobre 1979, pages 51-58, Paris, FR; J.-P. MUSSE et al.: "Système modulaire multitâches pour commande de processus"**

(73) Titulaire: **SEXTANT AVIONIQUE S.A.**
**Immeuble le Galilée Parc Tertiaire de Meu-**
**don 5/7 rue Jeanne Braconnier**
**F-92366 Meudon la Forêt Cédex(FR)**

(72) Inventeur: **Ducateau, Michel**
**4, rue de Harzé**
**F-02570 Chezy Sur Marne(FR)**
Inventeur: **Popescu, Daniel**
**11, rue Montmartre**
**F-75001 Paris(FR)**
Inventeur: **Sers, Jean-Marie**
**11, rue Edouard Lefebvre**
**F-78000 Versailles(FR)**

(74) Mandataire: **Marquer, Francis et al**
**Cabinet Moutard 35, Avenue Victor Hugo**
**F-78960 Voisins le Bretonneux(FR)**

NASA CONTRACTOR REPORT, NASA CR-1868, vol. II, Computer executive design for space station/base, octobre 1971, pages I,III-V,19-25,32-58, National Aeronautics and Space Administration, Washington, D.C., US; J.R. KENNEDY et al.: "Spaceborne computer executive routine functional design specification"

ELEKTRONIK, vol. 31, no. 1, 15 janvier 1982, pages 87-93, Munich, DE; P.V. BECHEN: "Software in silicon"

THE 11TH ANNUAL INTERNATIONAL SYMPOSIUM ON COMPUTER ARCHITECTURE CONFERENCE PROCEEDINGS, Ann Arbor, Michigan, 5-7 juin 1984, pages 4-11, Computer Society Press, New York, US; F.J. BURKOWSKI: "A vector and array multiprocessor extension of the sylvan architecture"

## Description

La présente invention concerne un dispositif pour l'optimalisation des performances de primitives temps réel d'un noyau d'exécutif temps réel sur des structures multiprocesseurs, notamment, mais non exclusivement, des structures multimicroprocesseurs embarquées à bord d'un aérodyne.

D'une manière générale, on sait que l'exécution d'un travail sur un ordinateur met en jeu des processeurs dont les échelles de temps sont très disparates. Il en résulte qu'un travail complexe unique ne peut pas utiliser efficacement l'ensemble des éléments d'une configuration. Il est alors possible d'en augmenter le rendement si l'on décompose ce travail en plusieurs travaux simples prêts à être exécutés.

Le rôle fondamental du noyau est donc de créer à partir de l'ordinateur nu, plusieurs machines virtuelles presque indépendantes les unes des autres. Il doit pour cela organiser le partage des différents éléments de la configuration (ou ressources) entre les travaux en cours. Il se charge ensuite de la gestion des entrées-sorties, d'une part, parce que les unités correspondantes font partie des ressources qu'il surveille, d'autre part, parce que les évènements liés aux entrées-sorties provoquent en général des changements dans l'état des travaux en cours d'exécution. Enfin, le noyau prend en charge des fonctions auxiliaires (par exemple la gestion de la date et de l'heure).

D'une façon plus précise, le noyau élabore une (ou plusieurs) machine virtuelle qui présente habituellement les propriétés suivantes :

- c'est un multiprocesseur capable d'exécuter en simultanéité apparente plusieurs programmes ; pour cela, le système d'exploitation distribue le temps du processeur (ou des processeurs) d'instruction et la mémoire centrale entre des entités appelées "tâches" ; il peut également fournir des mécanismes de communication entre les tâches ;
- le noyau prend en charge le détail des opérations d'entrée-sortie, que ce soit en ce qui concerne leur ordonnancement dans le temps, la correction des erreurs ou la synthèse d'opérations complexes. Le langage de programmation de la machine virtuelle noyau se présente comme une extension du langage machine de l'ordinateur support, un mécanisme spécial permettant la création d'instructions nouvelles, appelées primitives dont le rôle est de demander l'intervention du noyau pour exécuter des opérations complexes. C'est en particulier à ce niveau que se situent les fonctions dites de temps réel qui permettent d'utiliser des dispositifs réservés au système.

La machine virtuelle noyau est accessible, d'une part, aux machines des niveaux supérieurs et, d'autre part, à travers ceux-ci à des tâches soumises par les utilisateurs.

Au-dessus du noyau, on trouve des sous systèmes servant à créer des tâches et à les soumettre au noyau pour exécution.

Une tâche matérialise, du point de vue du noyau, un travail à exécuter, c'est-à-dire la conjonction d'un programme et des données auxquelles il s'applique. Le contexte d'une tâche est alors l'ensemble des informations qui lui sont accessibles, qu'elle modifie ou qui peuvent influer sur son déroulement. Le programme d'une tâche ne peut pas distinguer deux situations de contexte identique. On peut donc interrompre une tâche en un point quelconque de son déroulement, puis la remettre en route plus tard, sans influer sur le traitement qu'elle effectue, à condition de restaurer son contexte dans l'état où il était au moment de l'interruption.

Du point de vue du noyau, une tâche peut être dans les deux états fondamentaux suivants :

- elle est active si elle est en cours d'exécution sur l'un des processeurs de la configuration ;
- elle est en attente dans le cas contraire. A ce titre, elle peut être en attente d'un évènement si elle a sous-traité une opération à un autre élément de la configuration et attend que celle-ci soit terminée ; elle peut être également en attente d'une ressource si elle a besoin pour poursuivre d'une unité qui n'est pas disponible.

Une ressource est un composant d'un système informatique pouvant être isolément alloué à une tâche ; cette ressource est alors préemptible si elle est libérée sous le contrôle du système ou non préemptible si sa libération est sous le contrôle de la tâche utilisatrice.

Il s'avère que dans des systèmes à architectures multiprocesseurs et surtout multimicroprocesseurs la réalisation de la machine virtuelle noyau par programmation d'un langage machine du système présente un certain nombre d'inconvénients liés notamment à la puissance des microprocesseurs (manque de puissance) qui conduisent à obtenir des performances médiocres (par exemple des temps d'exécution trop longs) qui sont incompatibles avec certaines applications et en particulier à des applications en temps réel par exemple du type de celles exploitées par les systèmes embarqués à bord des aérodynes notamment pour l'aide au pilotage et à la navigation de ces aérodynes.

On rappelle à ce sujet que l'évolution rapide durant ces dernières années des performances des engins volants est due en grande partie à l'épanouissement de l'électronique numérique.

Or, il s'avère que cette électronique évolue dans un contexte temps réel sévère et que les tentatives de réalisation de noyau temps réel pris en compte au niveau logiciel ne répondaient qu'imparfaitement aux exigences d'un environnement temps réel du type avionique.

Tel est le cas notamment du dispositif décrit dans le brevet DE-A-3 105 527 qui met en oeuvre un noyau d'exécutif temps réel à l'aide d'une machine spécialisée et adaptée à accomplir des algorithmes exécutés dans les primitives dudit noyau.

L'invention a donc plus particulièrement pour but de supprimer ces inconvénients. Elle propose donc à cet effet un système matériel destiné à répondre spécifiquement aux exigences de l'informatique embarquée dans un environnement temps réel approprié et ayant notamment pour objectifs :

- des temps d'exécution de primitives temps réel plus courts sur des architectures multimicroprocesseurs,
- une indépendance machine (type de processeur),
- une réalisation matérielle embarquable (faible encombrement, faible consommation),
- une prise en compte des évènements externes dans des temps minimum,
- une facilité d'implémentation de divers noyaux,
- une facilité d'interfaçage aux compilateurs de langage de haut niveau.

Elle propose donc, dans un système multiprocesseur, un dispositif permettant, d'une façon similaire à celle décrite dans la publication Ouest Allemande Elektronik, vol. 31, no.1, 15 Janvier 1982, pages 87-93, l'implémentation d'un noyau d'exécutif temps réel, à l'aide d'une machine microprogrammée et à logique câblée spécifique des algorithmes exécutés dans les primitives dudit noyau.

D'une façon plus précise, ce dispositif comprend un opérateur temps réel OTR se présentant sous la forme d'un circuit (microprogrammé et/ou câblé) connecté au BUS mémoire commun aux processeurs de la structure multiprocesseurs, cet opérateur OTR se comportant, vu d'un processeur de la structure, comme une zone de mémoire commune et possédant les circuits nécessaires pour la reconnaissance d'adresse, l'émission et la réception des données à traiter et la génération des signaux de contrôle des échanges, cet opérateur comprenant en outre des moyens aptes à gérer le contexte temps réel d'au moins une partie des processeurs de la structure, des moyens permettant d'associer aux objets gérés par un noyau, notamment les tâches, les évènements matériels et logiciels, les ressources et le temps, une série de primitives de base, des moyens de traitement desdites primitives, à raison d'une primitive à la fois, ces moyens de traitement assurant notamment la gestion de la ressource horloge, des ressources actives et comprenant un ordonnanceur apte à gérer le contexte temps réel de plusieurs processeurs en fonction d'une stratégie déterminée, cet ordonnanceur étant notamment prévu pour réveiller les tâches cycliquement, pour marquer des attentes sur délais, pour activer les tâches après délais, l'échéance d'un cycle ou d'un délai créant dans l'opérateur un évènement traité comme les évènements matériels et logiciels, l'opérateur décidant le passage d'un état à un autre des tâches en fonction des primitives du contexte temps réel.

Selon l'invention, ce dispositif est caractérisé en ce que l'opérateur temps réel OTR est composé d'au moins deux automates spécialisés dans la gestion de certains objets temps réel, en particulier la gestion des files des tâches éligibles en attente de processeur, la gestion des échanges avec les processeurs, la gestion des délais, des cycles et de l'horloge temps réel HTP, des files d'attente des ressources, de l'ensemble des tâches en attente d'évènement et la prise en compte des interruptions externes, ces automates communiquant entre eux par un BUS (BUS OTR) interne à l'opérateur OTR. Dans ce dispositif, les objets gérés, qui peuvent consister en les tâches, les évènements matériels et logiciels, les ressources et le temps, sont associés à une série de primitives de base pouvant être composées pour obtenir les primitives du noyau implanté sur le système pour une application déterminée, ces primitives de base constituant le noyau qu'utilisent les processeurs pour autoriser ladite machine de gérer les tâches permettant de réaliser les fonctions.

Il s'avère que la spécialisation de chaque automate permet une manipulation efficace des objets temps réel. Le fait qu'ils puissent travailler en parallèle accroît dans de nombreux cas la puissance de traitement de l'opérateur.

Le mode de communication interautomates permet en outre d'obtenir une grande simplicité matérielle, une grande simplicité des séquences interprogrammées pour l'émission ou la réception des messages, et un débit important.

Dans le dispositif précédemment décrit, l'échange entre le système et l'OTR s'effectue selon les modes suivants :

- la demande d'accès à l'OTR par le système pour le traitement d'une primitive, ce mode comprenant la vérification préalable par le système de la liberté d'accès à l'OTR puis la réponse à cette vérification, par voie matérielle, de l'OTR au système ;
- dans le cas où l'OTR est libre, l'envoi du code et des paramètres de la primitive à l'OTR par simple écriture à la zone d'adressage de l'OTR ;
- l'exécution par l'OTR, après acquisition desdits codes et desdits paramètres d'une séquence opératoire (microprogrammée) relative à la primitive ; puis ensuite
- la décision par l'OTR, en fonction de cette primitive et du contexte temps réel :
  . de répondre au processeur si la primitive autorise cette action,
  . d'interrompre un processeur pour un changement de tâche, ou
  . de terminer l'exécution de la primitive sans action vers le processeur ; et
- s'il y a lieu, la lecture de la réponse de l'OTR par un des processeurs du système, cette lecture s'effectuant à l'adresse de l'OTR.

Par ailleurs, l'ordonnancement des tâches (algorithme de choix) est effectué par l'OTR qui attribue, en fonction de la stratégie choisie, un processeur à une tâche éligible.

Par exemple, une stratégie à priorité consiste à donner un processeur libre ou occupé à la tâche la plus prioritaire pouvant s'exécuter sur ce processeur.

Une autre stratégie peut consister à donner un processeur libre à la première tâche pouvant s'exécuter sur ce processeur.

Bien entendu, l'OTR peut interrompre un processeur du système lorsqu'une tâche plus prioritaire que la tâche en cours est élue.

Ceci se fait par l'émission d'une interruption vers le processeur concerné, l'OTR se mettant ensuite en attente d'échange jusqu'à ce que le processeur soit à même de recevoir les paramètres lui indiquant la nouvelle tâche à exécuter.

Comme précédemment mentionné, les objets manipulés par l'OTR sont les tâches, les évènements matériels et logiciels, les ressources et le temps. Les définitions de ces objets dans le cadre de l'invention sont données ci-après :

Les tâches

Une tâche est un programme à exécuter sur un processeur pour permettre la réalisation d'une fonction générale de l'application.

Pour commencer ou continuer son exécution, une tâche peut rencontrer des conditions temporelles, matérielles ou logicielles. Une condition fondamentale est d'avoir un processeur ou ressource active disponible, compte tenu des priorités pour le déroulement de la tâche.

Une tâche peut prendre différents états durant un cycle application. Ces états sont définis par un graphe de transition d'état et les transitions sont conditionnées par l'exécution des primitives rencontrées, les évènements externes (ITS) et les évènements temporels.

Elle possède des attributs qui la caractérisent et qui conditionnent également son déroulement :
- numéro de priorité,
- numéro de processeur,
- etc...

Les évènements

L'évènement est un mécanisme qui assure la synchronisation soit entre une ou des tâches et l'environnement extérieur soit entre plusieurs tâches.

Lorsque l'évènement arrive, les tâches en attente de cet évènement peuvent continuer leur exécution sous certaines conditions (processeur disponible, pas d'autre attente, ...).

Les ressources

L'OTR manipule plusieurs types de ressources :
- les ressources actives ou processeurs,
- la ressource horloge,
- les ressources privées (sont gérées par la tâche et non par l'OTR),
- les ressources passives (élément du système, sous programme ou matériel non partageable).
Elles ne sont pas gérées identiquement :
- la ressource privée est gérée exclusivement par la tâche possesseur de ladite ressource ;

- la ressource passive constitue le mécanisme de partage contrôlé de possession d'élément matériel ou logiciel ;
- la ressource horloge et les ressources actives sont gérées par l'OTR mais elles ne sont pas manipulables directement par les primitives.

### Le temps

L'horloge temps réel, référence dans un contrôle de processus, assure un déroulement correct de l'application et le respect des contraintes temporelles liées à l'environnement.

Le temps, géré par l'OTR, permet entre autre de réveiller les tâches cycliquement, de marquer les attentes sur délais ou d'activer les tâches après délais. L'échéance d'un cycle ou d'un délai crée dans l'OTR un évènement qui se trouve traité comme les évènements matériels ou logiciels.

La tâche peut être placée dans les cinq états suivants :

### Tâche morte

Une tâche morte est une tâche connue de l'application mais qui n'a pas d'attache avec son contexte de lancement. Lors d'une anomalie, les tâches ne peuvent plus s'exécuter. Elles ne sont plus gérées.

### Tâche dormante

La tâche possède tous les paramètres pour démarrer son application. C'est l'état normal d'une tâche ayant terminé son exécution ou venant d'être initialisée.

### Tâche éligible

Une tâche éligible est une tâche en attente de ressource active. Elle peut s'exécuter dès que l'ordonnanceur (partie de l'OTR qui décide des priorités de l'attribution d'un processeur pour une tâche en fonction de la priorité) l'a désignée pour prendre le contrôle d'un processeur.

### Tâche élue

Une tâche qui a obtenu la possession d'un processeur passe de l'état éligible à l'état élue.

Elle peut être préemptée au profit d'une autre tâche suivant les critères choisis pour l'ordonnancement.

Si la tâche rencontre au cours de son exécution une condition non satisfaite la concernant sur délai, sur ressource ou sur évènement, elle abandonne le processeur au profit d'une autre tâche.

### Tâche suspendue

Une tâche élue qui rencontre une condition précitée non satisfaite se place dans l'état suspendue.

La condition remplie, cette tâche passe dans l'état éligible.

Une tâche peut être suspendue sur :
- délai,
- ressource,
- évènement,
- cycle.

Selon d'autres caractéristiques de l'invention :

a) les primitives associées aux tâches qu'utilise le processeur pour communiquer avec l'OTR sont indiquées ci-après avec entre parenthèses les objets qui leur sont associés :

Activer (tâche) qui correspond au passage de l'état dormante à l'état éligible de la tâche.

Se terminer (tâche) qui correspond au passage de l'état élue à l'état dormante de la tâche.

Tuer (tâche) qui correspond au passage de tout état à l'état morte de la tâche avec libération des ressources occupées par la tâche, (dans ce cas, la tâche n'est plus gérée par l'OTR).

Consulter (tâche, attribut) qui donne une information sur les attributs de la tâche tels que sa priorité, ou son processeur d'exécution, etc ...

b) Les primitives associées aux ressources (non partageables par les processeurs) sont au moins les suivantes :

Réserver (ressource) qui demande la prise de possession d'une ressource par une tâche. Dans ce cas, si la ressource est occupée, la tâche est placée dans l'état suspendue. Par contre, si la ressource est libre, la tâche continue son exécution. Un délai de possession et/ou d'attente maximum peut alors être spécifié dans la primitive.

Libérer (ressource) : cette primitive marque la fin de possession d'une ressource. A la suite de cette libération, l a tâche peut être préemptée au profit d'une autre tâche plus prioritaire en attente de cette ressource.

Test (ressource) qui permet de connaître l'état de la ressource.

c) Les primitives associées aux évènements sont au moins les suivantes :

Signaler (évènement) : cette primitive crée une impulsion sur l'évènement logiciel, par exemple la fin d'un calcul.

Attendre (délai), attendre (évènement) : ces primitives suspendent la tâche qui exécute la primitive, la tâche passant dans l'état éligible quand la condition est satisfaite.

Valider, invalider (évènement) , qui valident ou invalident un évènement, l'évènement devenant alors connu ou inconnu du système.

Créer (cycle) : cette primitive créant un objet cycle qui se trouve alors traité dans l'OTR comme un évènement.

Attacher, détacher (tâche, cycle) : ces primitives assurant respectivement la connexion et la déconnexion d'une tâche et d'un cycle, le cycle (évènement déclenché périodiquement) pouvant être alors géré dans l'OTR sans que des tâches y soient attachées.

Bien entendu, les primitives de base précédemment énoncées peuvent évoluer au gré du concepteur de l'application en fonction du noyau implanté et des performances dont il souhaite disposer.

Un mode de réalisation de l'invention sera décrit ci-après, à titre d'exemple non limitatif, avec référence aux dessins annexés dans lesquels :

La figure 1 est un diagramme d'état des tâches avec indication des primitives qui leur sont associées ;

La figure 2 représente schématiquement une architecture multiprocesseur à laquelle est connecté un opérateur temps réel selon l'invention ;

La figure 3 est une représentation schématique de l'architecture d'un opérateur temps réel selon l'invention ;

La figure 4 représente un mode d'exécution d'une structure matérielle utilisable dans chacun des automates de l'OTR représenté figure 3 ; et

La figure 5 est une représentation schématique de l'interface application/moniteur/OTR.

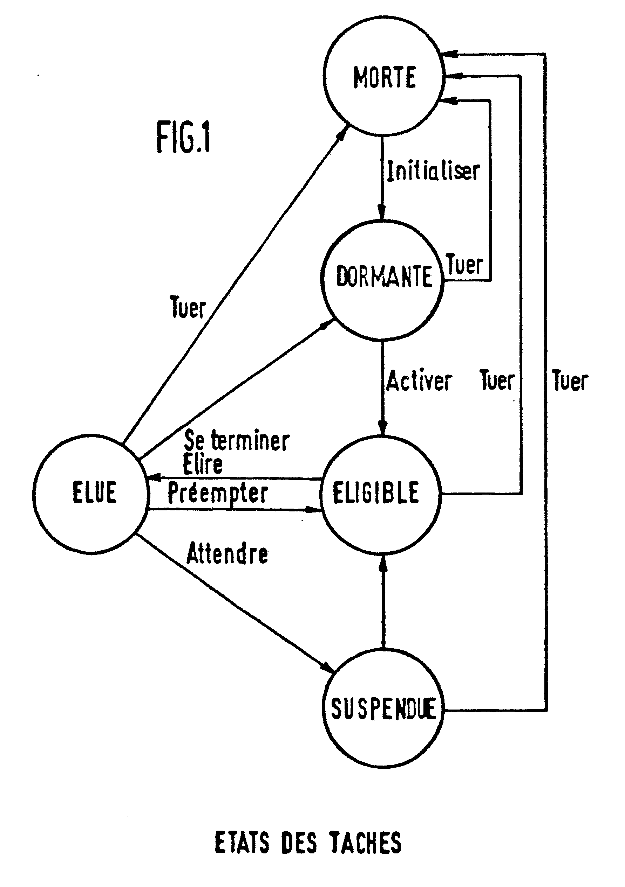

Le diagramme de la figure 1 permet de montrer les différents états que peut prendre une tâche ainsi que les transitions possibles entre ces états, transitions qui sont conditionnées par l'exécution des primitives rencontrées, les évènements externes (interruptions) et les évènements internes.

Comme on peut le constater, selon ce diagramme, il est possible de passer de l'état élue d'une tâche aux états "morte", "dormante", "éligible", "suspendue", respectivement par les primitives "tuer", "se terminer", "préempter", "attendre". De même, de l'état "suspendue", il est possible de passer à l'état "morte" ou à l'état "éligible" d'une tâche par les primitives "tuer" et "préempter" ; de l'état "dormante", il est possible de passer à l'état "morte" ou à l'état "éligible" d'une tâche par les primitives "tuer" et "activer" ; et de l'état "éligible", il est possible de passer à l'état "morte" ou à l'état "élue" par les primitives "tuer" ou "élire".

Il convient de noter à ce sujet que l'appel à l'ordonnanceur en vue d'attribuer un processeur à une tâche éligible ne peut s'effectuer que :

- sur une transition d'état "suspendue" à "éligible" d'une tâche,
- sur une transition d'état "dormante" à "éligible" d'une tâche,
- sur une transition d'état "élue" à "dormante" d'une tâche, et
- sur une transition "élue" à "morte" d'une tâche.

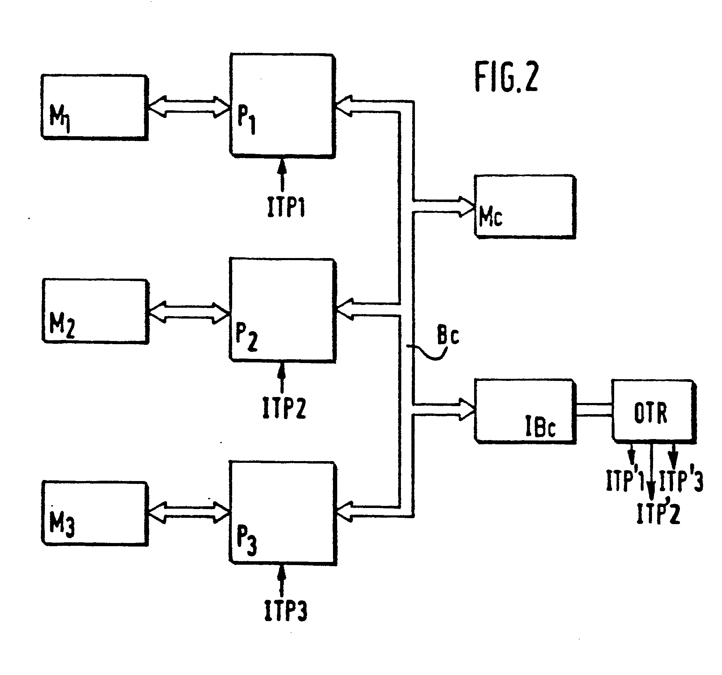

Telle que représentée sur la figure 2, la structure multiprocesseur se compose de trois processeurs $P_1$, $P_2$, $P_3$ respectivement associés à trois mémoires locales $M_1$, $M_2$, $M_3$ et présentant chacun une entrée de commande des interruptions $ITP_1$, $ITP_2$, $ITP_3$.

Ces trois processeurs $P_1$, $P_2$, $P_3$ sont par ailleurs connectés à un BUS commun $B_c$ sur lequel est notamment reliée une mémoire commune $M_c$.

Sur ce BUS commun $B_c$ est également connecté un opérateur temps réel OTR selon l'invention, par l'intermédiaire d'un interface $IB_c$ spécifique au BUS $B_c$. Vu du processeur, cet opérateur se comporte comme une zone mémoire commune aux processeurs $P_1$, $P_2$, $P_3$. Il possède les circuits nécessaires pour la reconnaissance d'adresse, l'émission et la réception des données à traiter, et la génération des signaux de contrôle des échanges. Il possède notamment trois sorties de contrôle des interruptions ITP'$_1$, ITP'$_2$, ITP'$_3$ respectivement connectées aux trois entrées ITP$_1$, ITP$_2$, ITP$_3$.

Les échanges entre l'un des processeurs et l'OTR s'effectuent entre les trois types suivants :

- La demande de primitive

L'OTR ne traitant qu'une seule primitive à la fois, tout processeur désirant accéder à l'OTR doit au préalable vérifier qu'il est libre. La réponse de l'OTR est émise de façon matérielle et non pas sous contrôle du microprogramme. Ceci permet de ne pas perturber l'exécution d'une primitive par l'OTR pour indiquer qu'il est occupé et ralenti r le traitement OTR en cours.

- L'envoi du code et des paramètres

C'est une simple écriture à la zone d'adressage de l'OTR, après avoir vérifié que l'OTR est libre.

- La lecture de la réponse OTR

Lors de la réception d'une interruption venant de l'OTR ou lors de l'exécution de certaines requêtes (par exemple RESERVE) le processeur a besoin d'informations contenues dans l'OTR (actions à entreprendre : changement de tâche ; arrêt ; numéro de tâche à suspendre ou à élire ; ressource libre ou occupée). L'accès à ces informations se fait par une lecture à l'addresse OTR.

D'autre part, l'OTR peut interrompre un processeur lorsqu'une tâche plus prioritaire que la tâche en cours est élue. Ceci se fait par l'émission d'une interruption vers le processeur concerné, l'OTR se mettant ensuite en attente d'échange jusqu'à ce que le processeur soit à même de recevoir les paramètres lui indiquant la nouvelle tâche à exécuter.

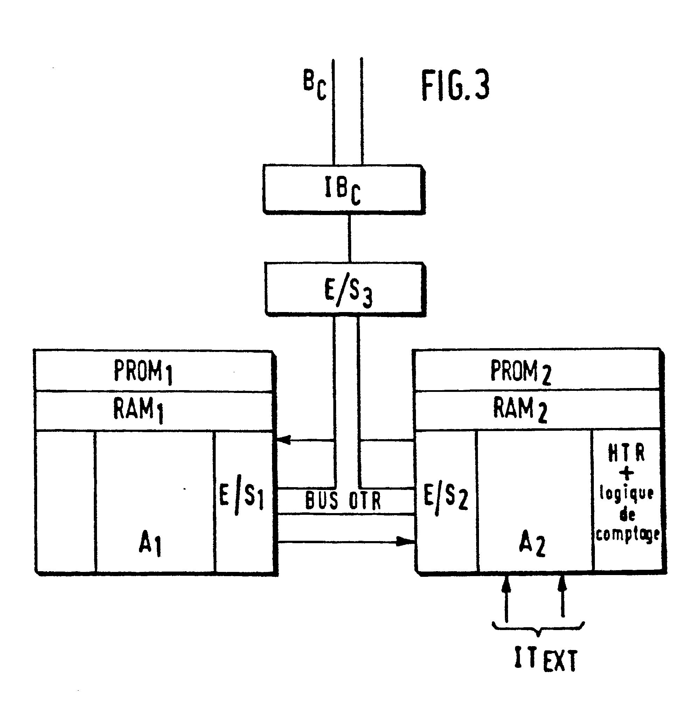

Comme on peut le voir sur la figure 3, l'OTR est composé d'au moins deux automates, chacun étant spécialisé dans la gestion spécifique de certains objets temps réel :

- l'automate A$_1$ peut gérer les files des tâches éligibles en attente de processeur. Il peut avoir la charge des échanges avec les processeurs P$_1$, P$_2$, P$_3$,
- l'automate horloge A$_2$ peut gérer les délais, les cycles et l'horloge temps réel, les files d'attente des ressources et l'ensemble des tâches en attente d'évènement. Il assure la prise en compte des interruptions externes.

Chacun de ces automates comprend une unité central en un registre d'entrée/sortie E/S$_1$, E/S$_2$, connecté à un BUS interne à l'OTR, appelé BUS OTR, une mémoire vive RAM$_1$, RAM$_2$, et une mémoire morte (ou programmable) PROM$_1$, PROM$_2$.

L'OTR comprend en outre au moins un registre E/S$_3$ connecté entre le BUS OTR et l'interface IB $_c$. Par ailleurs, l'OTR comprend des moyens pour émettre vers le processeur concerné un signal d'interruption, notamment lorsque l'algorithme de choix décide un changement de tâche sur ce processeur. Ce signal reste actif tant que le processeur n'a pas accédé à l'OTR pour lire le code de l'opération à effectuer.

L'automate A$_2$ peut comporter une horloge temps réel HTR et une logique de comptage. L'horloge HTR présente une période programmable par appel d'une requête spécifique à l'OTR.

Cette horloge HTR est conçue de manière à émettre un signal d'interruption horloge ITH pour l'ensemble de la machine OTR, lorsqu'une période s'est écoulée. Ce signal d'interruption est prioritaire, de sorte qu'il sera pris en compte dès que l'OTR aura terminé l'opération en cours.

Il peut comprendre des entrées de contrôle d'interruption externe IT ext ainsi que des moyens de mise en forme et de mémorisation de ces signaux d'interruption. Les informations d'interruption sont ensuite transmises vers un encodeur de priorité sur un des automates. Lorsque le traitement des interruptions extérieures est autorisé, l'OTR prend en compte l'interruption de plus forte priorité mémorisée à cet instant et remet à zéro les susdits moyens de mémorisation.

Par ailleurs, les automates A$_1$, A$_2$, sont reliés entre eux par des circuits de sélection de composant C $_s$.

Cette structure permet ainsi à un automate d'envoyer un message à un autre automate.

Il s'avère que bien que chaque automate soit dédié à une fonction particulière, les traitements à effectuer sont assez semblables.

Ainsi, mis à part quelques particularités, il est possible d'utiliser une structure de base similaire pour les automates A$_1$, A$_2$.

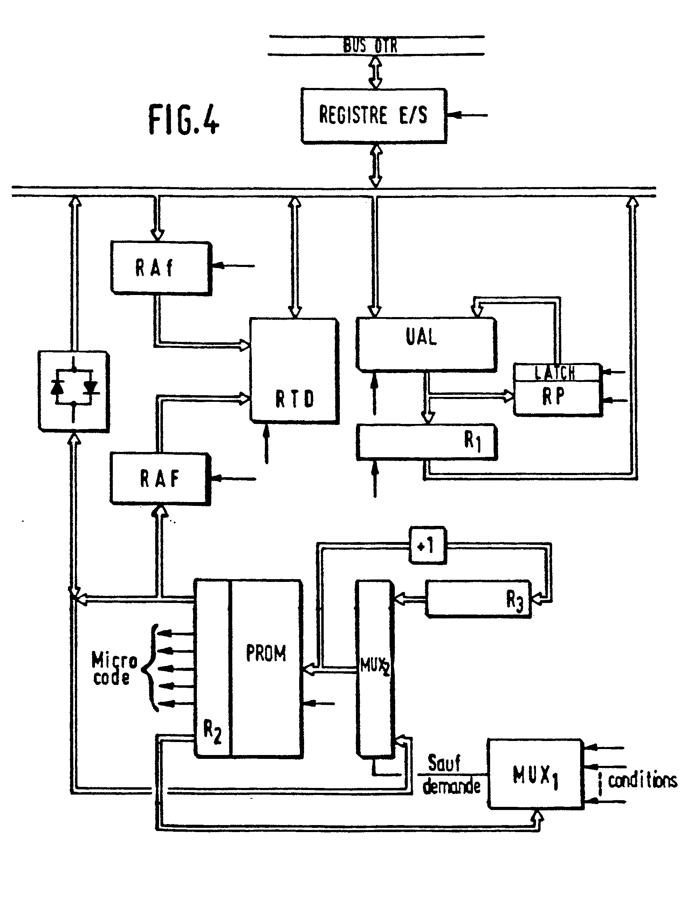

La figure 4 donne un exemple d'exécution d'une telle structure qui comprend, pour chacun des automates :

- une RAM par exemple de 2k octets, dite RAM Tables et Descripteurs (RTD) (qui correspond aux RAM$_1$, RAM$_2$ précédemment mentionnées). Elle contient toutes les informations permettant de décrire à un instant donné l'état des objets temps réel manipulés par l'automate. L'architecture matérielle de l'automate est conçue de façon à pouvoir facilement et rapidement consulter et/ou modifier le contenu de la RTD,
- deux registres d'adresse de la RTD (Registre Adresse Poids faible RAf, Registre Adresse Poids Fort RAF). Ceci permet d'accéder rapidement au paramètre désiré : un registre contient le numéro du paramètre, l'autre le numéro de l'objet temps réel concerné (tâche, cycle, ressource, évènement ...),
- une RAM rapide par exemple de 4 octets, dite RAM paramètres (RP). Elle sert à stocker, de façon temporaire, des données manipulées par le traitement en cours,
- une Unité Arithmétique et Logique (UAL) qui peut par exemple effectuer au moins les opérations suivantes :

$$F = D \qquad\qquad F = D + 1$$
$$F = D + B \qquad\qquad F = D + B + 1$$
$$F = D - B$$
$$F = \&FF \qquad\qquad F = \emptyset$$
$$F = B$$

- un registre $R_1$ en sortie d'UAL pour stocker un résultat,
- un double registre $R_2$ pour l'envoi et la réception de messages internes à l'OTR,
- une mémoire de microprogramme PROM et un séquenceur pour enchaîner les opérations nécessaires pour chaque requête. L'adressage de cette mémoire PROM est réalisé :
  . soit par le champ microprogramme (par l'intermédiaire du multiplexeur de choix de condition de saut $MUX_1$ et du multiplexeur $MUX_2$
    + saut inconditionnel demandé
    + saut sur condition réalisée
  . soit par le registre $R_3$ qui contient l'adresse microprogramme + 1 :
    + cas d'une séquence linéaire
    + saut non effectué (condition non réalisée).

Dans le cas particulier du bit de poids fort, ce bit est commandé soit par microprogramme, soit sur détection de l'envoi d'un message par un autre automate.

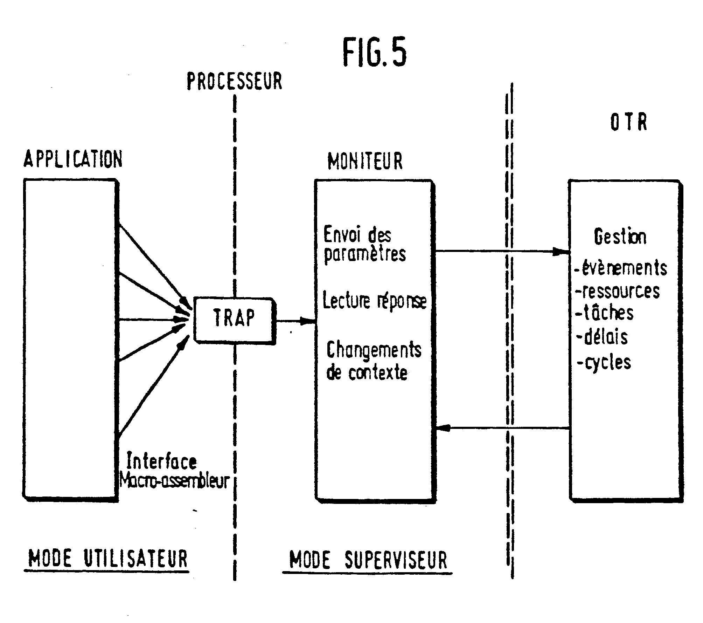

Dans le cadre d'une application, l'interface entre le processeur (mode utilisateur) et l'OTR est constitué par un moniteur (mode superviseur) selon un processus qui se trouve illustré sur la figure 5.

Pour un microprocesseur, l'entrée dans le moniteur se fait par une instruction TRAP. Cette instruction, permettant les appels système par une application, force une exception et réalise la commutation du mode utilisateur au mode système, dans lequel s'exécute tout le code appartenant au moniteur. L'ensemble du moniteur est alors écrit en assembleur.

Une requête au moniteur est constituée d'un groupe d'instructions assembleur, réalisant les fonctions suivantes :
- sauvegarde des registres nécessaires au passage des paramètres,
- chargement des paramètres dans les registres libérés, ou en mémoire RAM,
- entrée dans le moniteur TRAP,
- (exécution de la requête),
- après retour, restitution des registres utilisés.

Le moniteur étant l'interface entre le processeur et l'OTR, le code exécuté opère de la façon suivante :
- demande de primitive (teste si l'OTR est libre),
- envoi du ou des paramètres.

La suite est différente selon le type de requête :
a) Requête sans réponse de l'OTR
  - retour au programme utilisateur
b) Requête avec réponse de l'OTR
  - lecture du code indiquant l'opération à effectuer,
  - éventuellement, changement de tâche,
  - retour au programme utilisateur.

Il est à noter que le processeur n'est ininterruptible que pendant la phase de changement de contexte.

**Revendications**

1. Dispositif pour l'optimisation des performances de primitives temps réel d'un noyau d'exécutif temps réel dans un système multiprocesseur, ce dispositif comprenant un opérateur temps réel (OTR) se présentant sous la forme d'un circuit microprogrammé et/ou câblé connecté au BUS mémoire ($B_c$) commun aux processeurs ($p_1$, $p_2$, $p_3$) de la structure multiprocesseurs, cet opérateur (OTR) se comportant, vu d'un processeur de la structure, comme une zone de mémoire commune ($M_c$) et possédant les circuits nécessaires pour la reconnaissance d'adresse, l'émission et la réception des données à traiter et la génération des signaux de contrôle des échanges, cet opérateur comprenant en outre des moyens aptes à gérer le contexte temps réel d'au moins une partie des processeurs de la structure, des moyens permettant d'associer aux objets gérés par un noyau, notamment les tâches, les évènements matériels et logiciels, les ressources et le temps, une série de primitives de base, des moyens de traitement desdites primitives, à raison d'une primitive à la fois, ces moyens de traitement assurant notamment la gestion de la ressource horloge, des ressources actives et comprenant un ordonnanceur apte à gérer le contexte temps réel de plusieurs processeurs en fonction d'une stratégie déterminée, cet ordonnanceur étant notamment prévu pour réveiller les tâches cycliquement, pour marquer des attentes sur délais, pour activer les tâches après délais, l'échéance d'un cycle ou d'un délai créant dans l'opérateur un évènement traité comme les évènements matériels et logiciels, l'opérateur décidant le passage d'un état à un autre des tâches en fonction des primitives du contexte temps réel, caractérisé en ce que l'opérateur temps réel (OTR) est composé d'au moins deux automates ($A_1$, $A_2$) spécialisés dans la gestion de certains objets temps réel, en particulier la gestion des files des tâches éligibles en attente de processeur, la gestion des échanges avec les processeurs, la gestion des délais, des cycles et de l'horloge temps réel (HTR), des files d'attente des ressources, de l'ensemble des tâches en attente d'évènement et la prise en compte des interruptions externes (IT ext), ces automates ($A_1$, $A_2$) communiquant entre eux par un BUS (BUS OTR) interne à l'opérateur (OTR).

2. Dispositif selon la revendication 1,
caractérisé en ce que chacun desdits automates ($A_1$, $A_2$) comprend une unité centrale en au moins un registre d'entrée/sortie ($E/S_1$, $E/S_2$) connecté à un BUS interne à l'OTR, appelé BUS OTR, une mémoire vive ($RAM_1$, $RAM_2$) et une mémoire morte ou programmable ($PROM_1$, $PROM_2$).

3. Dispositif selon la revendication 2,
caractérisé en ce que l'OTR comprend en outre au moins un registre d'entrée/sortie ($E/S_3$) connecté au BUS ($B_c$) commun aux processeurs ($P_1$, $P_2$, $P_3$) par l'intermédiaire d'un interface ($IB_c$) spécifique au BUS commun ($B_c$) et au BUS OTR, ainsi que des moyens pour émettre vers le processeur concerné un signal d'interruption lorsque l'opérateur décrit un changement de tâche sur ce processeur, ce signal d'interruption restant actif tant que le processeur n'a pas accédé à l'opérateur pour lire le code de l'opération à effectuer.

4. Dispositif selon l'une des revendications 2 et 3,
caractérisé en ce qu'un automate comprend une horloge temps réel présentant une période programmable par appel d'une requête spécifique à l'opérateur, ainsi qu'une logique de comptage.

5. Dispositif selon la revendication 4,
caractérisé en ce que la susdite horloge temps réel (HTR) est conçue de manière à émettre un signal d'interruption (ITH) déclenchant un traitement immédiat si l'OTR est en attente ou après la primitive en cours d'exécution.

6. Dispositif selon l'une des revendications 2 à 5,
caractérisé en ce qu'un automate comprend des entrées de contrôle d' interruption externe (IT ext), ainsi que des moyens de mise en forme et de mémorisation de ces signaux d'interruption, ces signaux d'interruption étant ensuite orientés vers un encodeur de priorité, et en ce que l'opérateur prend en compte l'interruption de plus forte priorité mémorisée à cet instant et remet à zéro les susdits moyens de mémorisation.

7. Dispositif selon la revendication 6,
caractérisé en ce qu'un automate comprend en outre un encodeur de priorité servant à accélérer la recherche des tâches en attente d'un évènement et permettant d'indiquer immédiatement le numéro de la première tâche en attente de l'évènement traité.

## Claims

1. Device for the optimization of the performances of real time primitives of a real time executive kernel in a multiprocessor system, this device comprising a real-time operator (OTR) in the form of a microprogrammed and/or hard wired circuit connected to the memory BUS ($B_C$)common to the processors ($P_1$, $P_2$, $P_3$) of the multiprocessor architecture, this operator (OTR) behaving, seen from a processor of the architecture, as a common memory zone ($M_C$) and having the circuits required for address recognition, emission and reception of the data to be processed and generation of the signals controlling the exchanges, this operator further comprising means for controlling the real-time context of at least a part of the processors of the architecture, means for associating a series of basic primitives with the objects controlled by a kernel, particularly the tasks, the material and software events, the resources and the time, means for processing said primitives at the rate of one primitive at a time, these processing means ensuring particularly the control of the clock resource, of the active resources and comprising a scheduler adapted for controlling the realtime context of several processors as a function of a given strategy, this scheduler being provided in particular for awakening the tasks cyclically, to signal waiting times on delays, for activating the tasks after delays, the expiration of a cycle or a delay creating in the operator an event processed like the material and software events, the operator deciding the passage of the tasks from one to another state as a function of the primitives of the real-time context, characterized in that the realtime operator(OTR)is formed of at least two automata ($A_1$, $A_2$) specialized in the control of certain real-time objects, in particular the control of the files of eligible tasks waiting for a processor, control of the exchanges with the processors, control of the delays, of the cycles and of the real-time clock (HTR), of the files waiting for resources, of the whole of the tasks waiting for an event and taking external interruptions (IT ext) into account, these automata ($A_1$, $A_2$) communicating with each other by a BUS, (BUS OTR) internal to the operator (OTR).

2. Device according to claim 1, characterized in that each of said automata ($A_1$, $A_2$) comprises a central unit in the form of at least one input-output register ($E/S_1$, $E/S_2$) connected to a BUS internal to the OTR, called BUS OTR, a random access memory ($RAM_1$, $RAM_2$) and a read-only or programmable memory ($PROM_1$, $PROM_2$).

3. Device according to claim 2, characterized in that the OTR further comprises at least one input-output register ($E/S_3$) connected to the BUS ($B_C$) common to the processors ($P_1$, $P_2$, $P_3$) via an interface ($IB_C$) specific to the common BUS ($B_C$) and to the BUS OTR, as well as means for sending an interruption signal to the processor concerned when the operator describes a change of task on this processor, this interruption signal remaining active as long as the processor has not accessed the operator for reading the code of the operation to be carried out.

4. Device according to one of claims 2 and 3, characterized in that an automaton comprises a real time clock having a period which is programmable by sending a specific request to the operator, as well as a counting logic.

5. Device according to claim 4, characterized in that said real time clock (HTR) is designed so as to emit an interruption signal (ITH) triggering immediate processing if the OTR is waiting or after the primitive being executed.

6. Device according to one of claims 2 to 5, characterized in that an automaton comprises external interruption control inputs (IT ext), as well as means for shaping and storing these interruption signals, these interruption signals then being oriented towards a priority encoder and in that the operator takes into account the interruption with the highest priority stored at this time and resets said storage means.

7. Device according to claim 6, characterized in that an automaton further comprises a priority encoder for accelerating the search for tasks waiting for an event and for indicating immediately the number of the first task waiting for the processed event.

## Ansprüche

1. Vorrichtung zur Optimierung des Leistungsvermögens von Echtzeit-Primitivoperationen eines Echtzeitexekutivkerns in einem Multiprozessorsystem, wobei diese Vorrichtung einen Echtzeitoperator (OTR) aufweist, der in Form sines mikroprogrammierten und/ oder verkabelten Schaltkreises vorliegt, welcher mit der den Prozessoren ($P_1$, $P_2$, $P_3$) der Multiprozessorstruktur gemeinsamen Speichervielfachleitung ($B_C$) verbunden ist, wobei dieser Operator (OTR), gesehen von einem Prozessor der Struktur, sich wie ein gemeinsamer Speicherbereich ($M_C$) verhält und die zum Erkennen der Adresse, der Assendung und des Empfangs der zu bearbeitenden Daten und zur Erzeugung der Steuersignale der Datenübertragungen notwendigen Schaltkreise aufweist, wobei dieser Operator weiter Mittel, die den Echtzeitkontext mindestens eines Teils der Prozessoren der Struktur steuern können, Mittel, die es ermöglichen, den von einem Kern gesteuerten Objekten, insbesondere den Tasks, die Hardware-und Software-Vorgänge, die Hilfsquellen und die Zeit zuzuordnen, eine Reihe von Basisprimitiven, Mittel zur einzelnen Verarbeitung dieser Primitiven, wobei diese Verarbeitungsmittel insbesondere die Steuerung der Taktgeberhilfsquelle durchführen, aktive Hilfsquellen und einen Prioritätsgeber aufweisen, der den Echtzeitkontext mehrerer Prozessoren in Abhängigkeit von einer vorbestimmten Strategie steuern kann, wobei dieser Prioritätsgeber insbesondere vorgesehen ist, um die Tasks zyklisch aufzurufen, um Wartezeiten zu markieren, um die Tasks nach Wartezeiten zu aktivieren, wobei die Fälligkeit eines Zyklus oder einer Wartezeit im Operator einen Vorgang erzeugt, der wie die Hardware- oder Software-Vorgänge behandelt wird, wobei der Operator den Übergang der Tasks von einem Zustand zum anderen in Abhängigkeit von den Primitiven des Echtzeitkontextes bestimmt, dadurch gekennzeichnet, daß der Echtzeitoperator (OTR) aus mindestens zwei Automaten ($A_1$, $A_2$,) besteht, die auf die Steuerung gewisser Echtzeit-Objekte spezialisiert sind, insbesondere die Steuerung von Warteschlangen wählbarer Tasks in Erwartung des Prozessors, die Steuerung des Datenaustauschs mit den Prozessoren, die Steuerung der Wartezeiten, der Zyklen und des Echtzeittaktgebers (HTR), der Warteschlangen der Hilfsmittel, der Gesamtheit der Tasks in Erwartung eines Vorgangs und der Berücksichtigung der äußeren Unterbrechungen (IT ext), wobei diese Automaten ($A_1$, $A_2$) miteinander durch eine innere Vielfachleitung (BUS OTR) des Operators (OTR) verbunden sind.

2. Vorrichtung nach Anspruch 1, dadurch gekennzeichnet, daß jederdieser Automaten ($A_1$, $A_2$) eine zentrale Einheit in mindestens einem Eingangs/Ausgangsregister (E/$S_1$, E/$S_2$), das mit einer inneren Vielfachleitung, genannt BUS OTR, des Echtzeitoperators OTR verbunden ist, einen Arbeitsspeicher ($RAM_1$, $RAM_2$) und einen programmierbarer Festspeicher ($PROM_1$, $PROM_2$) aufweist.

3. Vorrichtung nach Anspruch 2, dadurch gekennzeichnet, daß der Echtzeitoperator OTR weiter mindestens ein Eingangs/Ausgangsregister (E/$S_3$) aufweist, das mit der den Prozessoren ($P_1$, $P_2$, $P_3$) gemeinsamen Vielfachleitung ($B_C$) über ein Interface ($IB_C$) verbunden ist, welches für die gemeinsame Vielfachleitung ($B_C$) und die Echtzeitoperator-Vielfachleitung BUS OTR spezifisch ist, wie auch Mittel, um dem betroffenen Prozessor ein Unterbrechungssignal zu senden, wenn der Operator eine Task-Änderung auf diesem Prozessor beschreibt, wobei dieses Unterbrechungssignal aktiv bleibt, solange der Prozessor nicht zum Operator gelangt ist, um den Kode der auszuführenden Operation zu lesen.

4. Vorrichtung nach einem der Ansprüche 2 und 3, dadurch gekennzeichnet, daß ein Automat einen Echtzeittaktgeber, der eine durch Zuhilfenahme einer Operator-spezifischen Anfrage programmierbare Periode enthält, wie auch eine Zähllogik aufweist.

5. Vorrichtung nach Anspruch 4, dadurch gekennzeichnet, daß dieser Echtzeittaktgeber (HTR) so ausgestaltet ist, daß er ein Unterbrechungssignal (ITH) aussendet, welches eine sofortige Verarbeitung auslöst, wenn der Echtzeitoperator OTR in Wartestellung ist oder nach der gerade durchgeführten Primitiven.

6. Vorrichtung nach einem der Ansprüche 2 bis 5, dadurch gekennzeichnet, daß ein Automat Eingänge zur Steuerung äußerer Unterbrechungen (IT ext) aufweist, wie auch Mittel zum Formatieren und Speichern dieser Unterbrechungssignale, wobei diese Unterbrechungssignale dann zu einem Prioritätskodierer geleitet werden, und daß der Operator die in diesem Moment gespeicherte Unterbrechung größter Priorität berücksichtigt und die genannten Speichermittel auf Null zurücksetzt.

7. Vorrichtung nach Anspruch 6. dadurch gekennzeichnet, daß ein Automat weiter einen Prioritätskodierer aufweist, der dazu dient, die Suche nach den einen Vorgang erwartenden Tasks zu beschleunigen und es ermöglicht, sofort die Nummer der ersten den gerade verarbeiteten Vorgang erwartenden Task anzugeben.

FIG.1

ETATS DES TACHES

FIG.2

FIG.3

# FIG.4

# FIG.5

PROCESSEUR

OTR

APPLICATION

MONITEUR

TRAP

Envoi des
paramètres

Lecture réponse

Changements
de contexte

Gestion

-évènements
-ressources
-tâches
-délais
-cycles

Interface
Macro-assembleur

MODE UTILISATEUR

MODE SUPERVISEUR